# FASCICULE DE BREVET EUROPEEN

(11) **EP 3 463 996 B1**
(45) Date de publication et mention de la délivrance du brevet: **08.07.2020**
(21) Numéro de dépôt: 17722058.9
(22) Date de dépôt: 12.05.2017
(51) Int. Cl.: B60S 1/56, G02B 27/00

(54) **SYSTÈME DE NETTOYAGE D'UN CAPTEUR OPTIQUE, ENSEMBLE COMPRENANT UN TEL SYSTÈME ET VÉHICULE AUTOMOBILE ASSOCIÉ**
SYSTEM ZUR REINIGUNG EINES OPTISCHEN SENSORS, SET MIT SYSTEM DES BESAGTEN TYPS UND ZUGEHÖRIGES KRAFTFAHRZEUG
SYSTEM FOR CLEANING AN OPTICAL SENSOR, SET COMPRISING A SYSTEM OF SAID TYPE, AND ASSOCIATED MOTOR VEHICLE

(30) Priorité: 27.05.2016 FR 1654757
(43) Date de publication de la demande: 10.04.2019
(73) Titulaire: Valeo Systèmes d'Essuyage, 78322 Le Mesnil Saint Denis (FR)
(72) Inventeur: POTON, Eric, 63500 Issoire (FR); HOUSSAT, Stéphane, 63500 Issoire (FR); GAUCHER, Vincent, 63500 Issoire (FR)
(74) Mandataire: Valeo Systèmes d'Essuyage
(86) Numéro de dépôt international: PCT/EP2017/061441
(87) Numéro de publication internationale: WO 2017/202625

(56) Documents cités:
- WO-A1-2016/074933
- DE-A1-102014 117 165
- FR-A1- 3 027 006

## Description

La présente invention concerne le domaine des capteurs optiques et en particulier les capteurs optiques destinés à être montés sur un véhicule automobile et plus précisément les systèmes de nettoyage de tels capteurs optiques.

Des caméras de vision arrière équipent un grand nombre des véhicules automobiles actuels, et elles font en particulier partie d'un système d'aide au parking qui permet de se garer plus facilement dans un emplacement sans se retourner et de détecter les obstacles situés derrière le véhicule. Des caméras sont également utilisées à l'avant du véhicule ou sur les côtés en remplacement ou en complément des rétroviseurs pour améliorer la vision du conducteur.

On connaît des caméras de recul qui sont installées à l'intérieur de l'habitacle contre la lunette / vitre arrière en visant vers l'arrière depuis la lunette arrière du véhicule. Ces caméras sont bien protégées des influences climatiques extérieures et peuvent par exemple bénéficier des systèmes de dégivrage et de nettoyage de la lunette arrière, par exemple d'un fil chauffant intégré dans la vitre de la lunette arrière.

Cependant, l'angle de vue n'est pas optimal, notamment pour une aide au parking et pour cette raison, on préfère que la caméra soit agencée au niveau du pare-choc arrière ou au niveau de la plaque d'immatriculation arrière du véhicule.

Dans ce cas, la caméra est donc fortement exposée aux projections de saletés qui peuvent se déposer sur son optique et ainsi réduire son efficacité, voire la rendre inopérante.

En particulier par temps de pluie ou en cas de neige en hiver, on constate des projections de pluie, de saletés, de sels ou de neige qui peuvent grandement affecter l'opérabilité du système de vision.

Il apparaît donc nécessaire de proposer un système de nettoyage efficace de ces systèmes de vision pour assurer un fonctionnement optimal tel que celui décrit dans le document DE102014117165A1, considéré comme l'état de la technique le plus proche de l'objet de la revendication 1.

La présente invention vise donc à proposer un tel système qui permette un nettoyage efficace et rapide.

A cet effet, la présente invention concerne un système de nettoyage d'un capteur optique, notamment de véhicule automobile, comprenant :
- au moins un élément de projection (5) d'un fluide de nettoyage, caractérisé en ce qu'il comprend une paroi de confinement (11) qui porte ledit, au moins un, élément de projection (5), ladite paroi de confinement (11) étant mobile entre une position escamotée dans laquelle la paroi de confinement est configurée pour être positionnée hors du champ de vision du capteur optique (3) et une position de nettoyage dans laquelle la paroi de confinement (11) est configurée pour être positionnée en regard du capteur optique (3) et dans laquelle la paroi de confinement (11) est positionnée devant le capteur optique (3) de façon à définir une enceinte de confinement (13) du capteur optique (3) à l'état assemblé du système de nettoyage (1) et dans laquelle ledit au moins un élément de projection (5) est positionné de manière à projeter le fluide de nettoyage vers le capteur optique (3).

Le au moins un élément de projection peut être de différents types connus de l'homme du métier: fixe classique du type boule, spray ou gicleur escamotable monté sur un piston/ressort actionné par la pression du fluide de nettoyage.

Dans un mode de réalisation particulier le système permet, de façon alternative ou complémentaire, un séchage d'un capteur optique.

De façon complémentaire et indépendante plusieurs aspects particuliers de différentes mises en œuvre de l'invention vont maintenant être décrits.

Selon un aspect de la présente invention, la paroi de confinement comporte une partie concave configurée pour être orientée vers le capteur optique lorsque la paroi de confinement est en position de nettoyage. Ainsi la paroi de confinement présente par exemple une forme de calotte sensiblement sphérique.

Selon un autre aspect de la présente invention, le fluide de nettoyage est un liquide et dans lequel le système comprend :
- un réservoir d'un liquide de nettoyage en communication fluidique avec l'élément de projection,
- une pompe configurée pour pomper le liquide du réservoir vers l'élément de projection.

Selon un aspect supplémentaire de la présente invention, l'élément de projection est un gicleur configuré pour projeter un liquide de nettoyage notamment à une pression d'entrée dans le gicleur comprise entre 1 et 1,7 bars.

Selon un aspect additionnel de la présente invention, la paroi de confinement comprend un canal interne d'alimentation relié de manière fluidique à l'élément de projection. Dans une variante de réalisation l'élément de projection est alimenté par un canal d'alimentation distinct de la paroi.

Selon un autre aspect de la présente invention, la paroi de confinement est mobile en rotation.

Selon un aspect supplémentaire de la présente invention, le système comprend un actionneur, par exemple un actionneur électrique, un actionneur électromagnétique ou un actionneur hydraulique, configuré pour déplacer la paroi de confinement entre la position escamotée et la position de nettoyage.

Selon un aspect additionnel de la présente invention, l'actionneur est un actionneur électrique présentant un arbre de sortie qui est couplé à la paroi de confinement.

Selon un autre aspect de la présente invention, l'actionneur comprend un vérin hydraulique.

Selon un aspect supplémentaire de la présente invention, le vérin hydraulique comprend:
- un corps de vérin comprenant un embout d'entrée destiné à être en communication fluidique avec la pompe et un embout de sortie destiné à être en communication fluidique avec l'élément de projection,
- un piston séparant le corps de vérin en une première chambre en communication fluidique avec l'embout d'entrée et une deuxième une chambre, ledit piston étant mobile entre une position proximale dans laquelle le volume de la première chambre est minimal et dans laquelle l'embout de sortie est en communication fluidique avec la deuxième chambre et un une position distale dans laquelle le volume de la première chambre est maximal et dans laquelle l'embout de sortie est en communication fluidique avec la première chambre de manière à alimenter l'élément de projection en liquide de nettoyage, le déplacement du piston de la position proximale à la position distale étant provoqué par le liquide de nettoyage pompé par la pompe.

Selon un aspect additionnel de la présente invention, le vérin hydraulique comprend un moyen élastique de rappel disposé dans la deuxième chambre et configuré pour provoquer le déplacement du piston de la position distale à la position proximale lorsque la pompe est inactive.

Selon un autre aspect de la présente invention, le fluide de nettoyage est un gaz, en particulier de l'air. Le système comprend par exemple un dispositif de compression d'air ou est au système de ventilation/chauffage du véhicule. L'air ainsi généré par le système de ventilation/chauffage peut ainsi être de type air froid ou air chaud.

La température de l'air de séchage peut être celle du chauffage habitacle ou bien commandée en fonction de la température extérieure mesurée par un capteur de température.

Deux clapets, de type tiroir ou papillon par exemple, motorisés peuvent permettre d'ouvrir et de fermer le ou les tuyaux d'approvisionnement en air hors cycle de nettoyage ou séchage du capteur optique. Ces clapets peuvent être commandés électroniquement et automatiquement pour être synchronisés et temporisés avec une fonction de lavage, i.e. nettoyage par liquide, du capteur optique. La commande peut être simultanée ou temporisée pour souffler après lavage du capteur.

Dans une variante, la projection d'air est gérée séparément. Ceci permet par exemple de projeter de l'air en permanence lors de l'utilisation du véhicule, ou tout au moins en en roulage sous la pluie permettant de chasser l'eau en continu.

Dans un exemple particulier l'objectif du capteur est traité hydrophobe.
Selon un autre aspect de la présente invention, le système comprend également une unité de traitement configurée pour piloter l'actionneur. L'unité de traitement commande par exemple au moins l'un des éléments actifs suivants : l'actionneur, le dispositif de compression d'air ou les clapets du tuyau d'approvisionnement, la pompe amenant le liquide du réservoir vers l'élément de projection, la pompe supplémentaire. L'unité de traitement peut ainsi activer la pompe pendant un premier temps prédéterminé lorsqu'une commande de nettoyage est reçue.

La présente invention concerne également un ensemble comprenant un capteur optique et un système de nettoyage du capteur optique tel que décrit précédemment.

La présente invention concerne également un véhicule automobile comprenant un ensemble tel que décrit précédemment.

D'autres caractéristiques et avantages de l'invention ressortiront de la description suivante, donnée à titre d'exemple et sans caractère limitatif, en regard des dessins annexés sur lesquels :
- la figure 1 représente un schéma d'un système de nettoyage d'un capteur optique selon un premier mode de réalisation et dans une position escamotée ;
- la figure 2 représente un schéma d'un système de nettoyage d'un capteur optique selon le premier mode de réalisation et dans une position de nettoyage ;
- la figure 3 représente un schéma d'un système de nettoyage d'un capteur optique selon un deuxième mode de réalisation et dans une position escamotée ;
- la figure 4 représente un schéma d'un système de nettoyage d'un capteur optique selon le deuxième mode de réalisation et dans une position de nettoyage ;
- la figure 5 représente un schéma d'un système de nettoyage d'un capteur optique selon un troisième de réalisation et dans une position de nettoyage ;
- la figure 6 représente un schéma d'un système de nettoyage d'un capteur optique selon un quatrième mode de réalisation et dans une position escamotée;
- la figure 7 représente un schéma d'un système de nettoyage d'un capteur optique selon le quatrième mode de réalisation et dans une position de nettoyage ;
- La figure 8 représente un schéma d'un système de nettoyage d'un capteur optique selon un cinquième mode de réalisation et dans une position escamotée ;
- La figure 9 représente un schéma d'un système de nettoyage d'un capteur optique selon un cinquième mode de réalisation et dans une position de nettoyage;
- les figures 10, 11 et 12 représentent des schémas d'un véhicule automobile comprenant un capteur optique à différents emplacements du véhicule.

Sur toutes les figures, les éléments ayant des fonctions identiques portent les mêmes numéros de référence.

Dans la suite de la description, les expressions « en amont », respectivement « en aval », pour désigner des éléments d'un dispositif hydraulique désignent des positions relatives desdits éléments pris dans le sens d'écoulement du fluide, en particulier du liquide.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou inter-changées pour fournir d'autres réalisations.

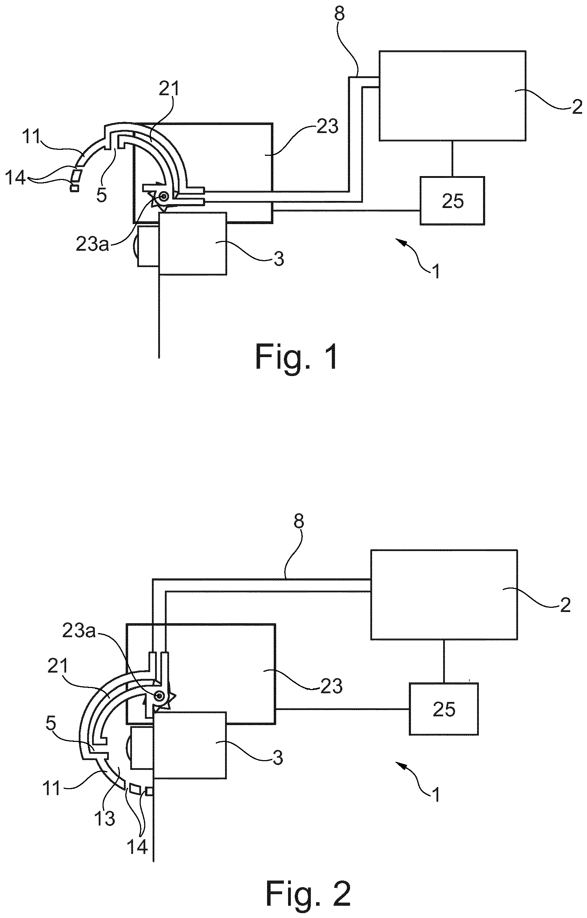

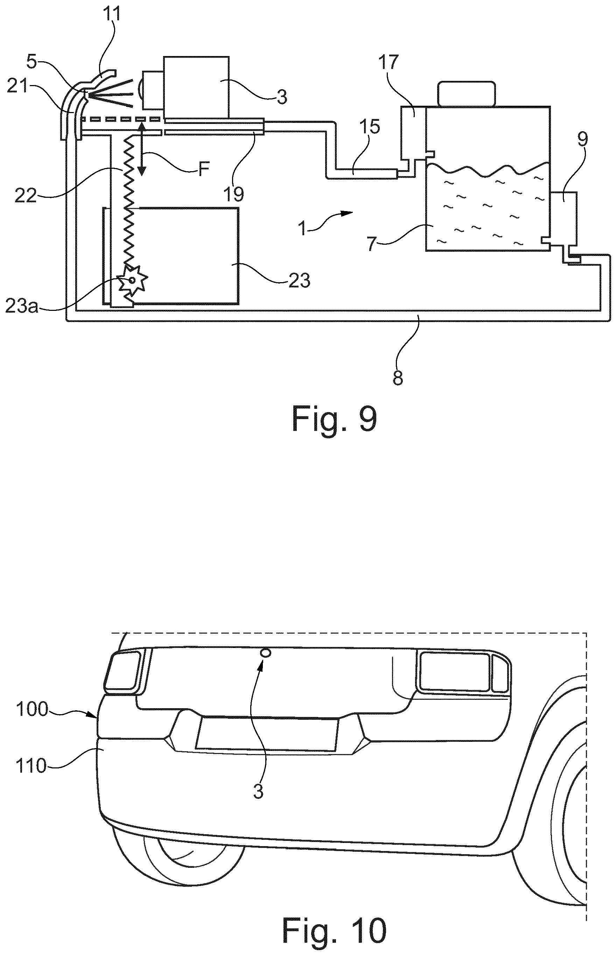

La figure 1 représente un exemple d'un capteur optique 3 et un système de nettoyage 1 du capteur optique 3. Un tel système de nettoyage 1 est notamment destiné à être installé sur un véhicule automobile 100, le capteur optique 3 étant par exemple une caméra de recul située au niveau d'une façade arrière (pare-choc arrière 110, porte de coffre...) du véhicule 100 comme représenté sur la figure 10.

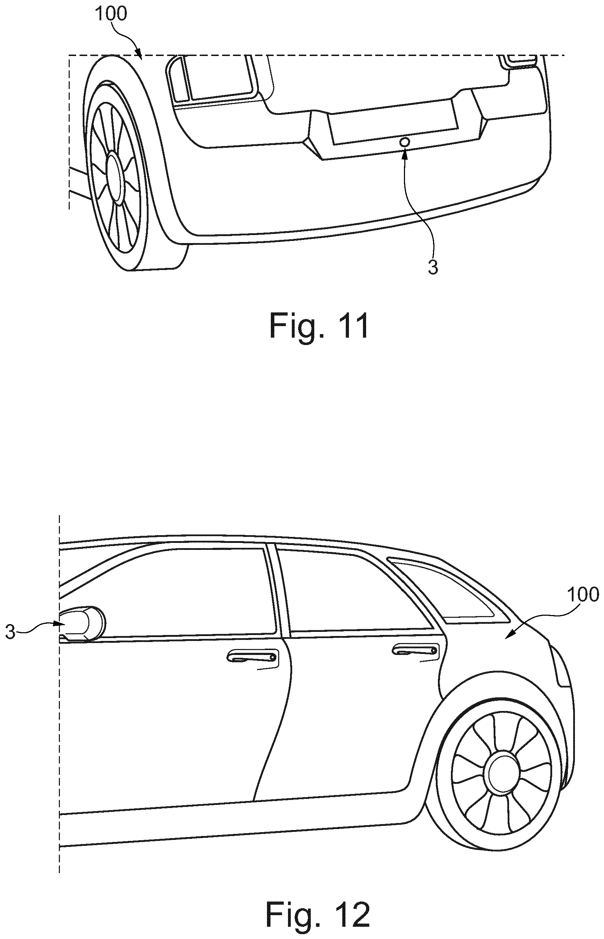

Cependant, d'autres types de capteur optique 3 et d'autres emplacements sur le véhicule peuvent être utilisés comme par exemple au niveau d'une façade avant telle que représentée sur la figure 11 ou au niveau d'une porte latérale comme représentée sur la figure 12 ou encore au niveau d'une aile, l'invention n'étant pas limitée aux emplacements décrits.

Le capteur optique 3 comporte par exemple une optique convexe (bombée) tel qu'une optique œil de poisson (« fish-eye » en anglais).

Le système de nettoyage 1 du capteur optique 3 comprend un élément de projection 5 d'un fluide de nettoyage configuré pour projeter du fluide de nettoyage sur l'objectif du capteur optique 3 lors du nettoyage du capteur optique 3. Le fluide de nettoyage peut être un liquide, par exemple un liquide de lavage ou un gaz tel que de l'air.

### 1) Nettoyage par projection de gaz

Dans le premier mode de réalisation présenté sur les figures 1 et 2, le fluide de nettoyage est un gaz, par exemple de l'air. Le gaz ainsi projeté peut remplir à la fois une fonction de séchage et de nettoyage. Dans l'exemple décrit, le système de nettoyage 1 comprend un dispositif de compression d'air 2, par exemple un compresseur électrique, qui est relié à l'élément de projection 5 par exemple via un tuyau d'approvisionnement 8. Le tuyau d'approvisionnement 8 comporte par exemple un ou plusieurs tubes rigides ou souples. Dans une variante le système de nettoyage 1 est relié par le tuyau d'approvisionnement 8, au système de ventilation/chauffage du véhicule.

Le système de nettoyage 1 comprend également une paroi de confinement 11 qui est mobile entre une position escamotée (fig.1) dans laquelle la paroi de confinement 11 est positionnée hors du champ de vision du capteur optique 3 et une position de nettoyage (fig.2) dans laquelle la paroi de confinement 11 est positionnée devant le capteur optique 3 de façon à définir une enceinte de confinement 13 du capteur optique 3 à l'état assemblé du système de nettoyage 1. Dans l'exemple illustré la paroi de confinement 11 en position escamotée présente une forme de casquette protectrice du capteur, sans gêner le fonctionnement du capteur. Dans une variante la paroi de confinement 11 en position escamotée est complètement logée dans un module support.Dans ce premier mode de réalisation, la paroi de confinement 11 est montée mobile en rotation pour permettre un mouvement de pivotement. La paroi de confinement 11 est entraînée par un actionneur 23, par exemple un actionneur électrique. La paroi de confinement 11 est alors couplée à l'actionneur 23 au niveau de l'arbre de sortie 23a qui permet son pivotement entre la position escamotée et la position de nettoyage.

La paroi de confinement 11 comporte une partie concave orientée vers le capteur optique 3 en position de nettoyage. Elle a par exemple une forme de calotte sphérique dont. Cependant, d'autres formes peuvent également être utilisées.

L'élément de projection 5 est porté par la paroi de confinement 11. L'élément de projection 5 est par exemple positionné sur la paroi de confinement 11 de manière à venir en regard de l'objectif du capteur optique 3 en position de nettoyage comme représenté sur la figure 2.

L'élément de projection 5 peut également être intégré dans la paroi de confinement 11.

Dans l'exemple illustré, un canal interne d'alimentation 21 est notamment ménagé dans la paroi de confinement 11 et relié de manière fluidique à l'élément de projection 5. Le canal interne d'alimentation 21 relie alors l'élément de projection 5 au tuyau d'approvisionnement 8.

Alternativement, le tuyau d'approvisionnement 8 peut être fixé sur la paroi de confinement 11 jusqu'à l'élément de projection 5, par exemple par des agrafes ou des crochets de maintien ou tout autre moyen de fixation connu de l'homme du métier.

Ainsi, pour nettoyer le capteur optique 3, l'actionneur 23 est commandé pour passer de la position escamotée de la figure 1 à la position de nettoyage de la figure 2. Le dispositif de compression d'air 2 est alors activé pour projeter de l'air sur l'objectif du capteur optique 3 de manière à chasser les saletés de l'objectif du capteur optique 3. L'air et les saletés peuvent alors être évacués de l'enceinte de confinement 13 via des trous d'évacuation 14 ménagés dans la paroi de confinement 11. Un espace peut également être laissé entre la paroi de confinement 11 et une paroi supportant le capteur optique 3 pour permettre l'évacuation de l'air et des saletés. Alternativement, les saletés peuvent être évacuées lors du passage de la paroi de confinement 11 de la position de nettoyage à la position escamotée.

Une fois le nettoyage terminé, l'actionneur 23 est configuré pour provoquer le passage de la paroi de confinement 11 de la position de nettoyage (fig.2) à la position escamotée (fig.1).

### 2) Nettoyage par projection de liquide

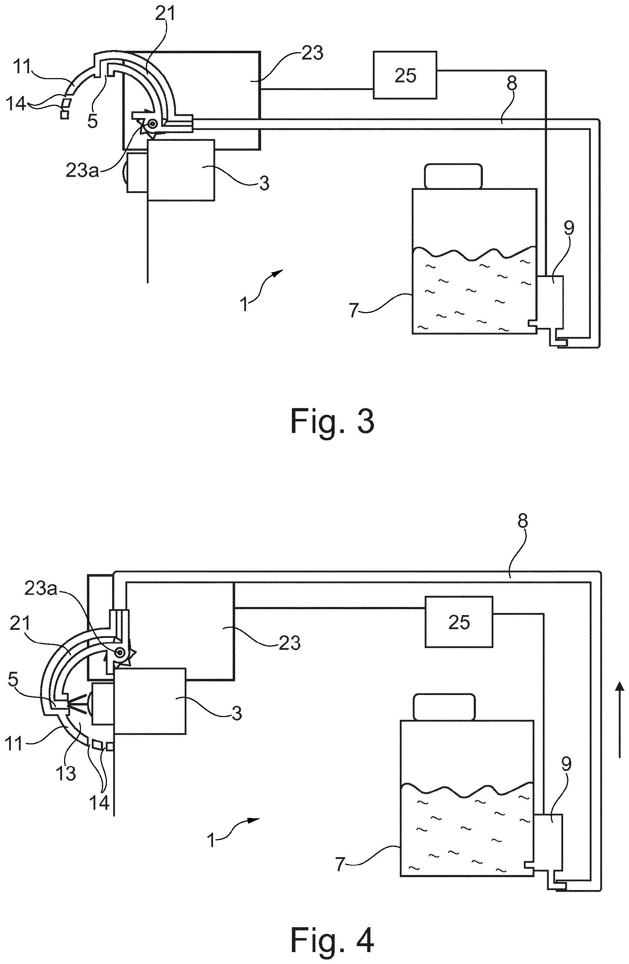

Selon un deuxième mode de réalisation représenté sur les figures 3 et 4, le fluide de nettoyage est un liquide.

Pour ce mode de réalisation, seules les différences par rapport au premier mode de réalisation des figures 1 et 2 seront décrites.

L'élément de projection 5 est par exemple réalisé par un gicleur configuré pour projeter un liquide de nettoyage à une pression comprise entre 1 et 1,7 bars ou par une buse de projection permettant de pulvériser le liquide de nettoyage sur le capteur optique 3.

Le système de nettoyage 1 comprend également un réservoir 7 du liquide de nettoyage en communication fluidique avec l'élément de projection 5, par exemple via un tuyau d'approvisionnement 8.

Le système de nettoyage 1 comprend également au moins une pompe 9 configurée pour pomper le liquide de nettoyage du réservoir 7 et alimenter l'élément de projection 5 en liquide de nettoyage issu du réservoir 7. La pompe 9 est par exemple une pompe électrique. Le tuyau d'approvisionnement 8 peut comprendre une valve anti-retour configurée pour empêcher le liquide de nettoyage de transiter de l'élément de projection 5 vers la pompe 9 lorsque la pompe 9 est inactive. A titre d'exemple non limitatif, la pompe 9 est ici agencée au niveau du réservoir 7, à l'interface avec le tuyau d'approvisionnement 8 mais d'autres agencements de la pompe 9 peuvent également être choisis.

Le système de nettoyage 1 comprend également la paroi de confinement 11 du liquide de nettoyage qui est mobile entre une position escamotée (figure 3) dans laquelle la paroi de confinement 11 est positionnée hors du champ de vision du capteur optique 3 et une position de nettoyage (figure 4) dans laquelle la paroi de confinement 11 est positionnée devant le capteur optique 3 de façon à définir une enceinte de confinement 13 du liquide de nettoyage à l'état assemblé du système de nettoyage 1.

Le liquide de nettoyage peut être évacué de l'enceinte de confinement 13 via des trous d'évacuation 14 ménagés dans la paroi de confinement 11.

Le fonctionnement est par ailleurs similaire au premier mode de réalisation décrit sur les figures 1 et 2.

De façon alternative ou complémentaire pour ces deux modes de réalisation, des trous d'évacuation 14 peuvent être présents dans un support 19 du capteur 3.

### 3) Nettoyage par liquide avec récupération du liquide

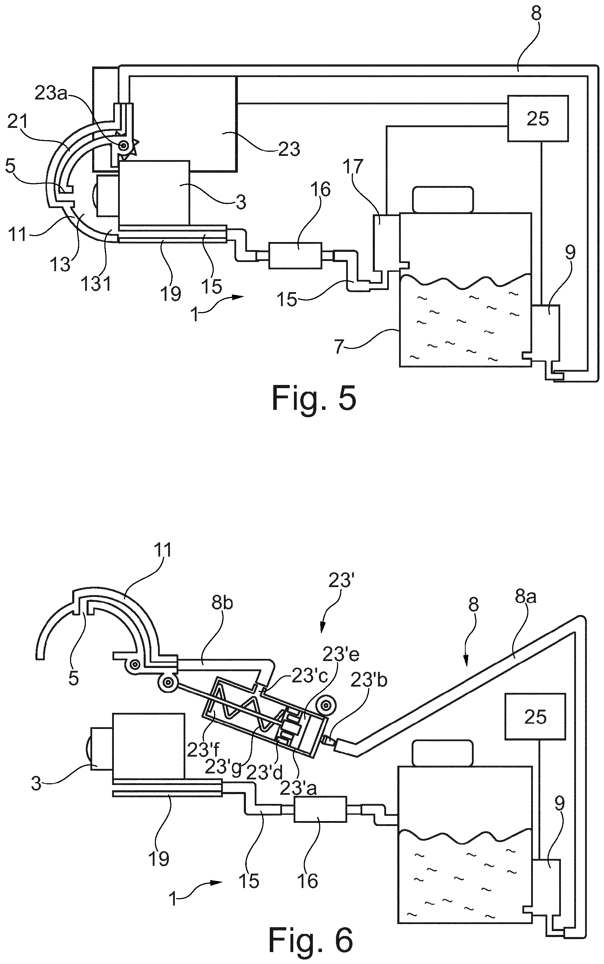

Le troisième mode de réalisation représenté sur la figure 5 se distingue en particulier de ceux des figures 1 à 4 en ce que la paroi de confinement 11 ne comprend pas de trous d'évacuation 14 et forme une enceinte de confinement 13 en position de nettoyage qui permet la récupération du liquide de nettoyage comme représenté sur la figure 5. L'enceinte de confinement 13 ainsi formée est en particulier étanche.

Le système de nettoyage 1 comprend de plus une conduite d'évacuation 15 du liquide de nettoyage reliée à l'enceinte de confinement 13 en position de nettoyage et configurée pour permettre de récupérer le liquide de nettoyage après le nettoyage du capteur optique 3 et permettre le retour du liquide de nettoyage vers le réservoir 7.

La conduite d'évacuation 15 est par exemple reliée à une partie basse 131 de l'enceinte de confinement 13 lorsque le système de nettoyage 1 est à l'état monté de manière à ce que le liquide de nettoyage s'écoule par gravité dans l'enceinte de récupération 13 vers la conduite d'évacuation 15.

La conduite d'évacuation 15 est par exemple placée à une hauteur inférieure à celle du capteur optique 3 (à l'état monté du système de nettoyage 1) et la paroi de confinement 11 vient en contact avec la conduite d'évacuation 15 en position de nettoyage.

Un joint ou un matériau souple peut être utilisé à l'interface entre la paroi de confinement 11 et la conduite d'évacuation 15 pour empêcher une fuite du liquide de nettoyage.

De plus, la conduite d'évacuation 15 peut être intégrée au moins partiellement à un support 19 du capteur optique 3. Le support 19 est par exemple placé sous le capteur optique 3 et comprend un canal interne permettant l'écoulement du liquide de nettoyage.

Alternativement, la conduite d'évacuation 15 peut être fixée sur le support 19 du capteur optique 3 par exemple par des agrafes ou des crochets de maintien ou tout autre moyen de fixation connu de l'homme du métier.

L'écoulement du liquide de nettoyage dans la conduite d'évacuation 15 de l'enceinte de confinement 13 jusqu'au réservoir 7 peut être réalisé par gravité. Dans ce cas, le réservoir 7 sera positionné à une hauteur inférieure à celle du capteur optique 3 et à celle de l'enceinte de confinement 13 (à l'état monté du système de nettoyage 1). Dans ce cas, la conduite d'évacuation 15 aura une orientation inclinée vers le réservoir 7.

L'écoulement dans la conduite d'évacuation 15 peut également être réalisé grâce à l'action de la pompe 9. Dans ce cas, les éléments du système de nettoyage 1 et en particulier la paroi de confinement 11 seront configurés de manière à obtenir un système fermé de façon étanche dans lequel circule le liquide de nettoyage.

Alternativement, une pompe supplémentaire 17 peut être disposée au niveau de la conduite d'évacuation 15 pour pomper le liquide de nettoyage de l'enceinte de confinement 13 jusqu'au réservoir 7.

Comme représenté sur la figure 5, un filtre 16 peut également être disposé dans la conduite d'évacuation 15 de manière à filtrer les particules de saletés, en particulier dont la taille est supérieure à une taille prédéterminée. Dans le cas d'un système de nettoyage 1 comprenant une pompe supplémentaire 17, le filtre 16 est positionné en amont de la pompe supplémentaire 17. Le filtre 16 est par exemple réalisé par un filtre à charbons ou un filtre à ultraviolets ou tout autre type de filtre connu de l'état de la technique.

Pour les trois premiers modes de réalisation, l'actionneur 23 peut être un actionneur électrique, notamment un moteur électrique configuré pour déplacer la paroi de confinement 11 entre la position escamotée et la position de nettoyage. Dans une variante, l'actionneur est électromagnétique.

### 4) Actionneur hydraulique

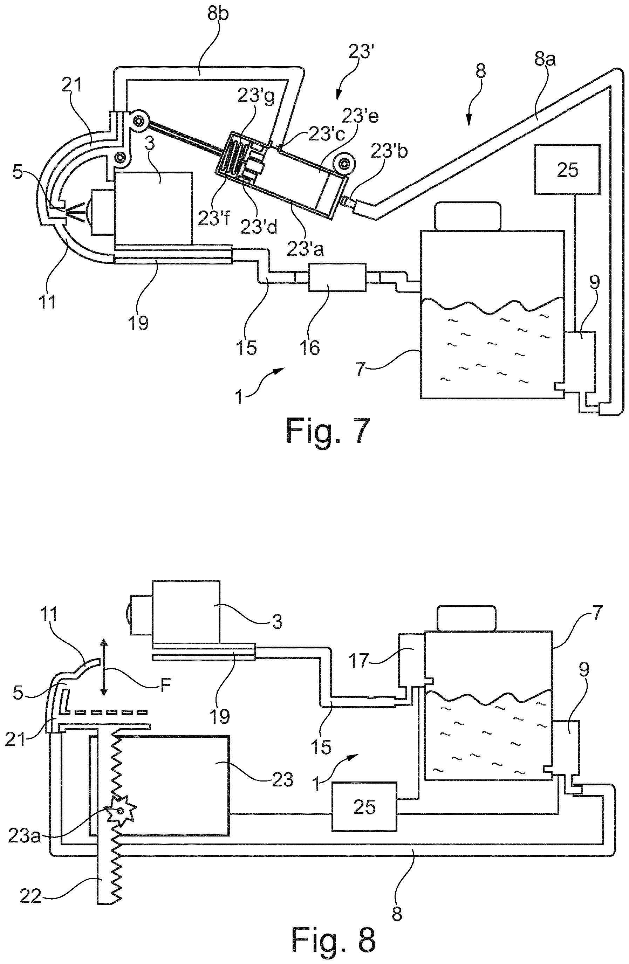

Selon un quatrième mode de réalisation représenté sur les figures 6 et 7, l'actionneur 23 peut être un actionneur hydraulique réalisé sous la forme d'un vérin hydraulique 23'.

Pour ce mode de réalisation, seules les différences par rapport aux deuxième et troisième modes de réalisation seront décrites.

Le vérin hydraulique 23' comprend un corps de vérin 23'a par exemple de forme cylindrique comprenant un embout d'entrée 23'b relié fluidiquement à la pompe 9 via une première partie 8a du tuyau d'approvisionnement 8 et un embout de sortie 23'c relié fluidiquement à l'élément de projection 5 via une deuxième partie 8b du tuyau d'approvisionnement 8.

L'embout d'entrée 23'b est par exemple situé à une première extrémité du corps de vérin 23'a. L'embout de sortie 23'c est par exemple situé sur un bord latéral du corps de vérin 23'a.

Le vérin hydraulique 23' comprend également un piston 23'd séparant le corps de vérin 23'a en une première chambre 23'e et une deuxième chambre 23'f.

La première chambre 23'e est en communication fluidique avec l'embout d'entrée 23'b de manière à recevoir le liquide de nettoyage pompé dans la première partie 8a du tuyau d'approvisionnement 8 par la pompe 9.

Dans la deuxième chambre 23'f est positionné un moyen élastique de rappel 23'g, par exemple un ressort hélicoïdal.

Le piston 23'd est mobile entre une position proximale et une position distale. Dans la position proximale représentée sur la figure 6, le volume de la première chambre 23'e est minimal et l'embout de sortie 23'c est en communication fluidique avec la deuxième chambre 23'f. Dans la position distale représentée sur la figure 7, le volume de la première chambre 23'e est maximal et l'embout de sortie 23'c est en communication fluidique avec la première chambre 23'e. Ainsi, en position distale, le liquide de nettoyage est transmis de la première chambre 23'c vers la deuxième partie 8b du tuyau d'approvisionnement 8 de manière à alimenter l'élément de projection 5 en liquide de nettoyage.

Le déplacement du piston 23'd de la position proximale à la position distale est provoqué par le liquide de nettoyage pompé par la pompe 9. De plus, le piston 23'd est relié à la paroi de confinement 11, par exemple par une liaison pivot de sorte que le déplacement du piston 23'd de la position proximale à la position distale provoque le déplacement de la paroi de confinement 11 de la position escamotée à la position de nettoyage. Ainsi, avec un tel vérin hydraulique 23', l'actionnement de la pompe 9 permet à la fois de faire passer la paroi de confinement 11 en position de nettoyage et d'alimenter l'élément de projection 5 en liquide de nettoyage.

Le moyen élastique de rappel 23'g est configuré pour provoquer le déplacement du piston 23'd de la position distale à la position proximale lorsque la pompe 9 est inactive.

Le mode de réalisation représenté sur les figures 6 et 7 diffère également du troisième mode de réalisation illustré sur la figure 5 par l'absence d'une pompe supplémentaire 17. Dans ce cas l'écoulement du liquide de nettoyage de l'enceinte de confinement 13 vers le réservoir 7 se fait par gravité comme décrit précédemment.

L'actionneur hydraulique 23' de ce quatrième mode de réalisation peut s'appliquer aux systèmes de nettoyage 1 présentés selon les deuxième et troisième modes de réalisation.

En effet, un tel actionneur hydraulique peut aussi être utilisé sans conduite de récupération 15, par exemple dans le mode de réalisation présenté sur les figures 3 et 4.

De plus, en lieu et place de l'actionneur hydraulique 23', un actionneur à air basé sur le même principe que l'actionneur hydraulique peut être utilisé pour déplacer la paroi de confinement 11 entre la position escamotée et la position de nettoyage et pour permettre la projection d'air sur le capteur optique 3 comme décrit dans le premier mode de réalisation.

### 5) Déplacement de la paroi de confinement 11 en translation

Selon un cinquième mode de réalisation représenté sur les figures 8 et 9, la paroi de confinement 11 peut également être mobile en translation entre une position escamotée représentée sur la figure 8 et une position de nettoyage représentée sur la figure 9.

Pour ce mode de réalisation, seules les différences par rapport aux modes de réalisation précédents seront décrites.

Dans ce cas, une roue dentée est par exemple montée sur l'arbre de sortie 23a de l'actionneur 23, par exemple un actionneur électrique, et une crémaillère 22 est reliée à la paroi de confinement 11 pour permettre son déplacement en translation comme indiqué par la flèche F. Ainsi, la paroi de confinement 11 est déplacée de bas en haut pour passer de la position escamotée à la position de nettoyage. En position de nettoyage, l'élément de projection 5 vient en regard de l'objectif du capteur optique 3 de sorte que l'actionnement de la pompe 9 provoque la projection du liquide de nettoyage sur l'objectif du capteur optique 3. Le liquide de nettoyage s'écoule ensuite par gravité vers le bas de la paroi de confinement 11 puis vers la conduite d'évacuation 15. Le fonctionnement est par ailleurs similaire aux autres modes de réalisation décrit précédemment.

Le déplacement en translation de la paroi de confinement 11 de ce cinquième mode de réalisation peut s'appliquer aux différents modes de réalisation présentés précédemment. Par exemple, un mode de réalisation sans conduite d'évacuation 15, avec un actionneur hydraulique et/ou un mode de réalisation avec projection d'air.

Les différentes caractéristiques des différents modes de réalisation décrits précédemment peuvent être combinées pour former de nouveaux modes de réalisation. De plus, un système de nettoyage 1 peut comprendre à la fois au moins un élément de projection 5 d'air et au moins un élément de projection 5 de liquide de nettoyage. Les deux éléments de projection 5 peuvent alors être disposés côte à côte sur la paroi de confinement 11. le nettoyage peut alors comprendre une première phase de projection de liquide et une deuxième phase de projection d'air afin de permettre un nettoyage optimal et/ou un séchage de l'objectif du capteur optique 3.

Selon les variantes de réalisation, le système de nettoyage 1 peut également comprendre une unité de traitement 25 configurée pour piloter au moins l'un des éléments actifs suivants :
- l'actionneur 23,
- la pompe 9,
- le dispositif de compression d'air 2
- les clapets du tuyau d'approvisionnement,
- la pompe supplémentaire 17.-

L'unité de traitement 25 est connectée à ou aux éléments actifs à piloter par une interface de communication telle qu'une liaison filaire ou des moyens de communication sans fil, par exemple via des ondes électromagnétiques comme une interface Wifi ou Bluetooth.

L'unité de traitement 25 est par exemple configurée pour recevoir une commande de nettoyage et pour actionner la pompe 9 et/ou le dispositif de compression d'air 2 pendant un premier temps prédéterminé.

Dans le cas d'un système de nettoyage 1 comprenant un actionneur électrique 23, l'unité de traitement 25 commande également l'actionneur électrique 23 pour positionner la paroi de confinement 11 en position de nettoyage avant ou en même temps que l'actionnement de la pompe 9. Dans le cas d'un système de nettoyage 1 comprenant une pompe supplémentaire 17, l'unité de traitement 25 commande également l'actionnement de la pompe supplémentaire 17 pendant un deuxième temps prédéterminé. Le deuxième temps prédéterminé est par exemple supérieur au premier temps prédéterminé pour permettre l'évacuation du liquide de nettoyage à la fin du premier temps prédéterminé. Le deuxième temps prédéterminé peut aussi avoir la même durée ou une durée plus courte que le premier temps prédéterminé mais son lancement peut être décalé temporellement par rapport au lancement du premier temps pour que la pompe supplémentaire 17 continue à être actionnée pendant une durée prédéterminée correspondant au décalage lorsque la pompe 9 est désactivée de manière à permettre la récupération du liquide de nettoyage utilisé.

Dans le cas d'un système de nettoyage 1 comprenant un actionneur hydraulique 23', la pompe 9 et éventuellement la pompe supplémentaire 17 sont pilotées par l'unité de traitement 25. Le temps prédéterminé d'activation de la pompe 9 peut être plus long dans ce mode de réalisation.

La commande de nettoyage reçue par l'unité de traitement 25 peut être une commande initiée par un utilisateur, par exemple via un élément de commande du tableau de bord ou peut être initiée automatiquement. La commande automatique peut être une commande à intervalle de temps régulier ou une commande en fonction d'une détection particulière voire une combinaison des deux. Par exemple, un nettoyage peut être initié au début ou à la fin de chaque utilisation du capteur optique 3. Un nettoyage peut aussi être commandé après une durée prédéterminée d'utilisation du capteur optique 3. Cette durée prédéterminée pouvant être modifiée lorsque des conditions particulières, par exemple des conditions pluvieuses sont détectées. La détection de pluie se faisant par exemple via un capteur dédié qui peut être utilisé également pour le pilotage des essuie-glaces. Un dispositif de traitement d'images peut également être associé au capteur optique 3 pour détecter si un nettoyage est nécessaire.

Selon un mode de réalisation alternatif, l'unité de traitement 25 peut être située en dehors du système de nettoyage 1, par exemple au niveau d'une unité centrale du véhicule automobile.

La présente invention concerne également un ensemble comprenant un capteur optique 3 et un système 1 de nettoyage du capteur optique 3 tel que décrit précédemment, l'ensemble pouvant comprendre le support 19 du capteur optique 3.

La présente invention concerne aussi un véhicule automobile 100 comprenant au moins un capteur optique 3 et au moins un système de nettoyage 1 associé au capteur optique 3. Différents emplacements du capteur optique 3 sont représentés sur les figures 10 à 12, notamment au niveau d'une porte de coffre, d'un pare-chocs avant ou d'une ouverture latérale mais d'autres emplacements du véhicule sont également envisageables pour l'implantation d'un ensemble comprenant un capteur optique 3 et un système de nettoyage 1 associé. Dans le cas d'un véhicule 100 comprenant plusieurs capteurs optiques 3, ces derniers peuvent être disposés à différents emplacements du véhicule, par exemple au niveau d'un pare-choc avant, d'un pare-choc arrière, d'une aile ou d'une porte latérale. De plus, certains éléments du système de nettoyage 1 peuvent être communs à plusieurs capteurs optiques 3. Un unique réservoir 7 peut par exemple être utilisé pour plusieurs ou pour tous les capteurs optiques 3 du véhicule. L'unité de traitement 25 peut également être commune à différents capteurs optiques 3.

Les différentes parties du tuyau d'approvisionnement 8 et/ou de la conduite d'évacuation 15 peuvent être co-extrudées, c'est-à-dire fabriquées comme un unique tuyau puis découpées selon la longueur voulue pour réduire les coûts de fabrication du système de nettoyage 1.

Le fonctionnement du système de nettoyage 1 va maintenant être décrit pour deux modes de réalisation (avec un actionneur électrique et avec un actionneur hydraulique).

### I) Fonctionnement avec actionneur électrique et sans conduite d'évacuation (Fig.1 à 4)

### a) Nettoyage avec projection d'air

Lorsqu'une commande de nettoyage est reçue par l'unité de traitement 25, cette dernière active l'actionneur électrique 23 pour faire passer la paroi de confinement 11 de la position escamotée (fig.1) à la position de nettoyage (fig.2) de sorte que l'élément de projection 5 vient en regard du capteur optique 3 et qu'une enceinte de confinement 13 est formée autour du capteur optique 3. Puis, l'unité de traitement 25 active le dispositif de compression d'air 2 de sorte que de l'air comprimé est envoyé vers l'élément de projection 5 via le tuyau d'approvisionnement 8. L'air comprimé est alors projeté sur le capteur optique 3. Le premier temps prédéterminé d'activation du dispositif de compression d'air 2 est par exemple de quelques secondes (5 secondes par exemple). L'air comprimé permet de chasser les saletés de l'objectif du capteur optique 3. Les saletés sont alors évacuées hors de la paroi de confinement 11 par gravité et/ou sous l'effet de l'air comprimé, par exemple via des trous d'évacuation 14 ménagés dans la paroi de confinement 11. Alternativement, les saletés peuvent rester dans l'enceinte de confinement 13 et être évacuées lorsque la paroi de confinement 11 repasse en position escamotée.

Une fois le nettoyage terminé, c'est-à-dire à la fin du premier temps prédéterminé, l'unité de traitement 25 commande l'actionneur électrique 23 pour faire passer la paroi de confinement 11 de la position de nettoyage (fig.2) à la position escamotée (fig.1) de manière à libérer le champ de vision du capteur optique 3 et permettre son utilisation.

### b) Nettoyage avec projection de liquide

Lorsqu'une commande de nettoyage est reçue par l'unité de traitement 25, cette dernière active l'actionneur électrique 23 pour faire passer la paroi de confinement 11 de la position escamotée (fig.3) à la position de nettoyage (fig.4) de sorte que l'élément de projection 5 vient en regard du capteur optique 3 et qu'une enceinte de confinement 13 est formée autour du capteur optique 3. Puis, l'unité de traitement 25 active la pompe 9 de sorte que du liquide de nettoyage est pompé du réservoir 7 jusqu'à l'élément de projection 5 via le tuyau d'approvisionnement 8. Le liquide de nettoyage est alors projeté sur le capteur optique 3 comme représenté sur la figure 2. Le premier temps prédéterminé d'activation de la pompe 9 est par exemple de quelques secondes (5 secondes par exemple). Le liquide de nettoyage et les saletés s'écoulent alors sur le capteur optique 3 et sur la paroi de confinement 11 pour les particules ayant été renvoyées par le capteur optique 3 ou ayant coulées de l'élément de projection 5 vers le bas de l'enceinte de confinement 13 puis sont évacuées hors de l'enceinte de confinement 1, par exemple via des trous d'évacuation 14.

Une fois le nettoyage terminé, c'est-à-dire à la fin du premier temps prédéterminé, l'unité de traitement 25 commande l'actionneur électrique 23 pour faire passer la paroi de confinement 11 de la position de nettoyage (fig.4) à la position escamotée (fig.3) de manière à libérer le champ de vision du capteur optique 3 et permettre son utilisation. Le passage de la paroi de confinement 11 en position escamotée peut aussi permettre l'évacuation des saletés et du liquide de nettoyage qui tombent sous l'effet de la gravité.

### II) Fonctionnement avec actionneur hydraulique et conduite d'évacuation (Fig.6 et 7)

Lorsqu'une commande de nettoyage est reçue par l'unité de traitement 25, cette dernière active la pompe 9 de sorte que du liquide de nettoyage est pompé du réservoir 7 vers le vérin hydraulique 23' via la première partie 8a du tuyau d'approvisionnement 8. Le liquide de nettoyage pompé provoque alors le déplacement du piston 23'd de sa position proximale (fig.6) vers sa position distale (fig.7) en comprimant le moyen élastique de rappel 23'g. Le passage en position distale du piston 23'd permet, d'une part, le passage de la paroi de confinement 11 de la position escamotée (fig.6) à la position de nettoyage (fig.7) de sorte que l'élément de projection 5 vient en regard du capteur optique 3 et qu'une enceinte de confinement 13 est formée autour du capteur optique 3 et, d'autre part, l'alimentation en liquide de nettoyage de l'élément de projection 5 via la deuxième partie 8b du tuyau d'approvisionnement 8. Le liquide de nettoyage est alors projeté sur le capteur optique 3. Le premier temps prédéterminé d'activation de la pompe 9 est par exemple de quelques secondes. Le liquide de nettoyage s'écoule alors sur le capteur optique 3 et sur la paroi de confinement 11 pour les particules ayant été renvoyées par le capteur optique 3 ou ayant coulées de l'élément de projection 5 vers le bas de l'enceinte de confinement 13. Le liquide de nettoyage est alors reçu par la conduite d'évacuation 15 dont une extrémité est située au niveau de la partie basse de l'enceinte de confinement 13 pour être redirigé vers le réservoir 7. Dans le cas où le système de nettoyage 1 comprend une pompe supplémentaire 17, cette dernière est également activée par l'unité de traitement 25 pendant un deuxième temps prédéterminé, par exemple quelques secondes, pour permettre ou faciliter le retour du liquide de nettoyage vers le réservoir 7 via la conduite d'évacuation 15. Une fois le nettoyage terminé, c'est-à-dire à la fin du premier temps prédéterminé, l'unité de traitement 25 désactive la pompe 9. Le moyen élastique de rappel 23'g se détend alors pour faire passer le piston 23'd de sa position distale vers sa position proximale ce qui provoque le déplacement de la paroi de confinement 11 de la position de nettoyage (fig.7) à la position escamotée (fig.6) de manière à libérer le champ de vision du capteur optique 3 et permettre son utilisation.

Le fonctionnement est similaire avec une paroi de confinement 11 déplacée en translation.

Ainsi, le système de nettoyage 1 de la présente invention permet un nettoyage efficace de l'objectif du capteur optique 3 grâce à la mobilité de l'élément de projection 5 qui vient en regard du capteur optique 3 lors du nettoyage.

## Revendications

1. Système (1) de nettoyage d'un capteur optique (3), notamment de véhicule automobile, comprenant : - au moins un élément de projection (5) d'un fluide de nettoyage, **caractérisé en ce qu'**il comprend une paroi de confinement (11) qui porte ledit, au moins un, élément de projection (5), ladite paroi de confinement (11) étant mobile entre une position escamotée dans laquelle la paroi de confinement est configurée pour être positionnée hors du champ de vision du capteur optique (3) et une position de nettoyage dans laquelle la paroi de confinement (11) est configurée pour être positionnée en regard du capteur optique (3) et dans laquelle la paroi de confinement (11) est positionnée devant le capteur optique (3) de façon à définir une enceinte de confinement (13) du capteur optique (3) à l'état assemblé du système de nettoyage (1) et dans laquelle ledit au moins un élément de projection (5) est positionné de manière à projeter le fluide de nettoyage vers le capteur optique (3).

2. Système (1) selon la revendication 1 dans lequel la paroi de confinement (11), notamment présentant sensiblement une forme de calotte sphérique, comporte une partie concave configurée pour être orientée vers le capteur optique (3) lorsque la paroi de confinement (11) est en position de nettoyage.

3. Système selon la revendication 1 ou 2 dans lequel le fluide de nettoyage est un liquide et dans lequel le système comprend :
- un réservoir (7) d'un liquide de nettoyage en communication fluidique avec l'élément de projection (5),
- une pompe (9) configurée pour pomper le liquide du réservoir (7) vers l'élément de projection (5).

4. Système (1) selon l'une des revendications précédentes dans lequel la paroi de confinement (11) comprend un canal interne d'alimentation (21) relié de manière fluidique à l'élément de projection (5).

5. Système (1) selon l'une des revendications précédentes dans lequel la paroi de confinement (11) est mobile en rotation.

6. Système (1) selon l'une des revendications précédentes comprenant un actionneur (23, 23') configuré pour déplacer la paroi de confinement (11) entre la position escamotée et la position de nettoyage.

7. Système (1) selon la revendication 6 dans lequel l'actionneur (23, 23') est un actionneur électrique (23) présentant un arbre de sortie (23a) qui est couplé à la paroi de confinement (11).

8. Système (1) selon la revendication 6 dans lequel l'actionneur (23, 23') comprend un vérin hydraulique (23').

9. Système (1) selon les revendications 3 et 8 dans lequel le vérin hydraulique (23') comprend:
- un corps de vérin (23'a) comprenant un embout d'entrée (23'b) destiné à être en communication fluidique avec la pompe (9) et un embout de sortie (23'c) destiné à être en communication fluidique avec l'élément de projection (5),
- un piston (23'd) séparant le corps de vérin (23'a) en une première chambre (23'e) en communication fluidique avec l'embout d'entrée (23'b) et une deuxième une chambre (23'f), ledit piston (23'd) étant mobile entre une position proximale dans laquelle le volume de la première chambre (23'e) est minimal et dans laquelle l'embout de sortie (23'c) est en communication fluidique avec la deuxième chambre (23'f) et un une position distale dans laquelle le volume de la première chambre (23'e) est maximal et dans laquelle l'embout de sortie (23'c) est en communication fluidique avec la première chambre (23'e) de manière à alimenter l'élément de projection (5) en liquide de nettoyage, le déplacement du piston (23'd) de la position proximale à la position distale étant provoqué par le liquide de nettoyage pompé par la pompe (9).

10. Système (1) selon la revendication 9 dans lequel le vérin hydraulique (23') comprend un moyen élastique de rappel (23'g) disposé dans la deuxième chambre (23'f) et configuré pour provoquer le déplacement du piston (23'd) de la position distale à la position proximale lorsque la pompe (9) est inactive.

11. Système (1) selon l'une des revendications précédentes dans lequel le système (1) comprend également une unité de traitement (25).

12. Système (1) selon l'une des revendications 1 ou 2 dans lequel le fluide de nettoyage est de l'air.

13. Ensemble comprenant un capteur optique (3) et un système (1) de nettoyage du capteur optique (3) selon l'une des revendications précédentes.

## Patentansprüche

1. System (1) zur Reinigung eines optischen Sensors (3), insbesondere eines Kraftfahrzeugs, umfassend:
- wenigstens ein Spritzelement (5) für ein Reinigungsfluid,
**dadurch gekennzeichnet, dass** es eine Begrenzungswand (11) umfasst, welche das wenigstens eine Spritzelement (5) trägt, wobei die Begrenzungswand (11) beweglich ist zwischen einer weggeklappten Position, in welcher die Begrenzungswand dafür ausgelegt ist, außerhalb des Sichtfeldes des optischen Sensors (3) positioniert zu werden, und einer Reinigungsposition, in welcher die Begrenzungswand (11) dafür ausgelegt ist, gegenüber dem optischen Sensor (3) positioniert zu werden, und in welcher die Begrenzungswand (11) derart vor dem optischen Sensor (3) positioniert ist, dass sie im montierten Zustand des Reinigungssystems (1) einen Einschließungsraum (13) für den optischen Sensor (3) definiert, und in welcher das wenigstens eine Spritzelement (5) derart positioniert ist, dass es das Reinigungsfluid in Richtung des optischen Sensors (3) spritzt.

2. System (1) nach Anspruch 1, wobei die Begrenzungswand (11), die insbesondere im Wesentlichen die Form einer Kugelkalotte aufweist, einen konkaven Teil umfasst, der so ausgebildet ist, dass er dem optischen Sensor (3) zugewandt ist, wenn sich die Begrenzungswand (11) in der Reinigungsposition befindet.

3. System nach Anspruch 1 oder 2, wobei das Reinigungsfluid eine Flüssigkeit ist und wobei das System umfasst:
- einen Behälter (7) mit einer Reinigungsflüssigkeit, der mit dem Spritzelement (5) in Fluidverbindung steht,
- eine Pumpe (9), die dafür ausgelegt ist, die Flüssigkeit aus dem Behälter (7) zu dem Spritzelement (5) zu pumpen.

4. System (1) nach einem der vorhergehenden Ansprüche, wobei die Begrenzungswand (11) einen Zuführungskanal (21) umfasst, der mit dem Spritzelement (5) in Fluidverbindung steht.

5. System (1) nach einem der vorhergehenden Ansprüche, wobei die Begrenzungswand (11) drehbeweglich ist.

6. System (1) nach einem der vorhergehenden Ansprüche, welches einen Stellantrieb (23, 23') umfasst, der dafür ausgelegt ist, die Begrenzungswand (11) zwischen der weggeklappten Position und der Reinigungsposition zu verlagern.

7. System (1) nach Anspruch 6, wobei der Stellantrieb (23, 23') ein elektrischer Stellantrieb (23) ist, der eine Ausgangswelle (23a) aufweist, die mit der Begrenzungswand (11) gekoppelt ist.

8. System (1) nach Anspruch 6, wobei der Stellantrieb (23, 23') einen Hydraulikzylinder (23') umfasst.

9. System (1) nach den Ansprüchen 3 und 8, wobei der Hydraulikzylinder (23') umfasst:
- einen Zylinderkörper (23'a), der einen Einlassstutzen (23'b), der dazu bestimmt ist, mit der Pumpe (9) in Fluidverbindung zu stehen, und einen Auslassstutzen (23'c), der dazu bestimmt ist, mit dem Spritzelement (5) in Fluidverbindung zu stehen, umfasst,
- einen Kolben (23'd), der den Zylinderkörper (23'a) in eine erste Kammer (23'e), die mit dem Einlassstutzen (23'b) in Fluidverbindung steht, und eine zweite Kammer (23'f) aufteilt, wobei der Kolben (23'd) beweglich ist zwischen einer proximalen Position, in welcher das Volumen der ersten Kammer (23'e) minimal ist und in welcher der Auslassstutzen (23'c) mit der zweiten Kammer (23'f) in Fluidverbindung steht, und einer distalen Position, in welcher das Volumen der ersten Kammer (23'e) maximal ist und in welcher der Auslassstutzen (23'c) mit der ersten Kammer (23'e) in Fluidverbindung steht, um dem Spritzelement (5) Reinigungsflüssigkeit zuzuführen, wobei die Verschiebung des Kolbens (23'd) von der proximalen Position zur distalen Position durch die von der Pumpe (9) gepumpte Reinigungsflüssigkeit hervorgerufen wird.

10. System (1) nach Anspruch 9, wobei der Hydraulikzylinder (23') ein elastisches Rückholmittel (23'g) umfasst, das in der zweiten Kammer (23'f) angeordnet ist und dafür ausgelegt ist, die Verschiebung des Kolbens (23'd) von der distalen Position zur proximalen Position hervorzurufen, wenn die Pumpe (9) inaktiv ist.

11. System (1) nach einem der vorhergehenden Ansprüche, wobei das System (1) außerdem eine Verarbeitungseinheit (25) umfasst.

12. System (1) nach einem der Ansprüche 1 oder 2, wobei das Reinigungsfluid Luft ist.

13. Anordnung, welche einen optischen Sensor (3) und ein System (1) zur Reinigung des optischen Sensors (3) nach einem der vorhergehenden Ansprüche umfasst.

## Claims

1. A system (1) for cleaning an optical sensor (3), in particular for a motor vehicle, comprising:
- at least one element (5) for projection of a cleaning fluid,
**characterized in that** it comprises a confinement wall (11) that carries said at least one projection element (5), said confinement wall (11) being able to move between a retracted position, in which the confinement wall is designed to be positioned outside the field of view of the optical sensor (3), and a cleaning position, in which the confinement wall (11) is designed to be positioned facing the optical sensor (3) and in which the confinement wall (11) is positioned in front of the optical sensor (3) such as to define an enclosure (13) for confinement of the optical sensor (3) in the assembled state of the cleaning system (1) and in which said at least one projection element (5) is positioned such as to spray cleaning fluid toward the optical sensor (3).

2. The system (1) as claimed in claim 1, wherein the confinement wall (11), which in particular has a substantially spherical cap form, includes a concave part oriented toward the optical sensor (3) when the confinement wall (11) is in a cleaning position.

3. The system as claimed in claim 1 or 2, wherein the cleaning fluid is a liquid and wherein the system comprises:
- a reservoir (7) of a cleaning liquid in fluid communication with the projection element (5),
- a pump (9) designed to pump the liquid from the reservoir (7) toward the projection element (5).

4. The system (1) as claimed in one of the preceding claims, wherein the confinement wall (11) comprises an internal supply duct (21) connected in a fluid manner to the projection element (5).

5. The system (1) as claimed in one of the preceding claims, wherein the confinement wall (11) is able to move in rotation.

6. The system (1) as claimed in one of the preceding claims, comprising an actuator (23, 23') designed to move the confinement wall (11) between the retracted position and the cleaning position.

7. The system (1) as claimed in claim 6, wherein the actuator (23, 23') is an electric actuator (23) that has an output shaft (23a) coupled to the confinement wall (11).

8. The system (1) as claimed in claim 6, wherein the actuator (23, 23') comprises a hydraulic ram (23').

9. The system (1) as claimed in claims 3 and 8, wherein the hydraulic ram (23') comprises:
- a ram body (23'a) comprising an input end fitting (23'b) intended to be in fluid communication with the pump (9) and an output end fitting (23'c) intended to be in fluid communication with the projection element (5),
- a piston (23'd) separating the ram body (23'a) into a first chamber (23'e) in fluid communication with the input end fitting (23'b) and a second a chamber (23'f), said piston (23'd) being able to move between a proximal position, in which the volume of the first chamber (23'e) is minimal and in which the output end fitting (23'c) is in fluid communication with the second chamber (23'f), and a distal position, in which the volume of the first chamber (23'e) is maximal and in which the output end fitting (23'c) is in fluid communication with the first chamber (23'e) such as to supply the projection element (5) with cleaning liquid, the movement of the piston (23'd) from the proximal position to the distal position being generated by the cleaning liquid pumped by the pump (9).

10. The system (1) as claimed in claim 9, wherein the hydraulic ram (23') comprises an elastic return means (23'g) arranged in the second chamber (23'f) and designed to generate the movement of the piston (23'd) from the distal position to the proximal position when the pump (9) is inactive.

11. The system (1) as claimed in one of the preceding claims, wherein the system (1) also comprises a processing unit (25).

12. The system (1) as claimed in one of claims 1 and 2, wherein the cleaning fluid is air.

13. An assembly comprising an optical sensor (3) and a system (1) for cleaning the optical sensor (3) as claimed in one of the preceding claims.
